# EUROPEAN PATENT SPECIFICATION

(11) **EP 0 377 133 B1**
(45) Date of publication and mention of the grant of the patent: **27.09.1995**
(21) Application number: 89122612.8
(22) Date of filing: 07.12.1989
(51) Int. Cl.: G06F 9/46

(54) **Wait depth limited concurrency control method**
Gleichzeitigkeitssteuerungsverfahren mit Beschränkung der Warte-Tiefe
Méthode de commande de simultanéité avec limitation de profondeur d'attente

(30) Priority: 05.01.1989 US 294334
(43) Date of publication of application: 11.07.1990
(73) Proprietor: International Business Machines Corporation, Armonk, N.Y. 10504 (US)
(72) Inventor: Franaszek, Peter A., Yorktown Heights, New York 10598 (US); Robinson, John Timothy, Yorktown Heights New York 10598 (US); Thomasian, Alexander, Pleasantville New York 10570 (US)
(74) Representative: Jost, Ottokarl, Dipl.-Ing.

(56) References cited:
- PROCEEDINGS OF THE ELEVENTH ANNUAL INTERNATIONAL COMPUTER SOFTWARE & APPLICATIONS CONFERENCE 9 October 1987, TOKYO, JAPAN pages 554 - 560 YAHIKO KAMBAYASHI, XINGGUO ZHONG 'CONTROLLABLE TIMESTAMP ORDERING AND ORIENTAL TIMESTAMP ORDERING CONCURRENCY CONTROL MECHANISMS'
- PROCEEDINGS OF THE MINI AND MICROCOMPUTERS AND THEIR APPLICATIONS CONFERENCE 30 June 1988, SANT FELIU DE GUIXOLS, SPAIN pages 197 - 201 SONG C. MOON, YOO S. KIM 'A HYBRID CONCURRENCY CONTROL SCHEME IN DISTRIBUTED DATABASE SYSTEMS'

## Description

The invention is related to a waiting depth limited concurrency control method which restricts the depth of the waiting tree to a predetermined depth and takes into account the progress made by transactions in conflict resolution.

In a multi-user data processing environment, some sort of concurrency control is needed in order to avoid problems when two or more users attempt to update a field of a record in the database on the basis of an initial value of that field. One approach to concurrency control is known as locking. Another is known as timestamping or optimistic concurrency control. Of the two, locking is the more important as it is the method that is predominantly used.

A transaction can obtain a lock on a record by issuing a request to a system component called the lock manager. If a transaction holds an exclusive lock on some object, say, a database record, then no other transaction can acquire a lock of any type on that object until the first transaction releases its lock. Any transaction that intends to update a record must first acquire a lock on it. If a lock cannot be acquired, the transaction is blocked and goes into a wait state. The transaction is restarted when the record becomes available and the lock can be granted. While this locking protocol solves the lost update problem, it introduces two others. One is the problem of deadlock, in which two or more transactions are in a simultaneous wait state, each waiting for the others to release a lock required for it to proceed. The other problem, which can be encountered in high performance applications (where typically a substantial number of transactions are being processed concurrently) is that many or even most of these transactions can be waiting at a given time, even without the presence of deadlock. Increasing the level of concurrency (the number of transactions attempting to proceed simultaneously) can actually reduce the number doing useful work (i.e., not waiting or in deadlock) at a given time.

The problem of deadlock has been extensively studied. In general, the lock manager must be capable of detecting the occurrence of deadlocks and resolve them. Resolving the deadlock amounts to choosing one of the locked transactions and rolling it back. This process involves terminating the transaction and undoing all its updates and releasing its locks so that the resources concerned can be allocated to other transactions.

The general problems associated with concurrency in database transactions is considered in more detail by C. J. Date at Chapter 3, "Concurrency", An Introduction to Database Systems, Vol. II, Addison-Wesley Publishing Company (1983). The reader is referred to that text for more information on the various concurrency problems and protocols used, especially in the locking type concurrency controls.

A running priority (RP) concurrency control (CC) is described in an article entitled "Limitations of Concurrency in Transaction Processing" by P. A. Franaszek and J. T. Robinson, published in ACM Transactions on Database Systems 10, March 1985, pp. 1 to 28. This method results in improved performance compared to standard locking because it approximates "essential blocking" by having no transaction blocked (i.e., waiting for a lock) held by another blocked transaction.

A method for a controllable timestamp ordering concurrency control is described in an article entitled "Controllable timestamp ordering and oriental timestamp ordering concurrency control mechanisms" by Y. Kambayashi and X. Zhong, published in Proceedings of the Eleventh Annual International Computer Software & Application Conference, 7 to 9 October 1987, Tokyo, Japan, IEEE Computer Society Press, pages 554-560. The method suggests a deviation from obeying the timestamp order if the difference of timestamps is less than a predetermined threshold value. Furthermore, for each transaction a roll back cost function is defined to be the time of the execution of the transaction so far. When there is a conflict, the transaction to be rolled back is selected by comparing the costs for a restart. In addition, a commit condition is used by comparing in a conflict situation the sum of the timestamp differences between the older transaction and the existing younger transactions with a predetermined threshold value. The older transaction can only be committed if the sum is smaller than this threshold value. The efficiency of this known method depends on the selection of proper threshold values which vary with the system and application environment.

A problem with the RP method, as well as others including the timestamping or optimistic concurrency control methods, is the quadratic effect; i.e., "long" transactions accessing a large number of data items are affected adversely by lock contention in a "quadratic" manner. More specifically, the more locks a transaction holds, the more susceptible it is to lock conflicts, and the time spent by the transaction in the system increases proportionally to the number of locks held, making the transaction more susceptible to lock conflicts and restarts.

It is therefore an object of the present invention as claimed to provide a new concurrency control method that reduces unnecessary lock conflicts.

It is another object of the invention as claimed to provide a concurrency control which appropriately restricts the depth of the waiting tree, as in the RP method, and in addition takes into account the progress made by transactions in conflict resolution.

According to the invention as claimed, instead of restarting transactions immediately, transaction restart is delayed until all conflicting transactions, at the point in time the conflict occurred, are completed or restarted. The wait depth limited (WDL) concurrency control (CC) of this invention, while restricting the depth of the waiting tree to one as in the RP method so that no blocked transaction can block another, has the following additional advantages: First, it mitigates the problem that long transactions have disproportionally long response times by taking into account the number of data items accessed and locks obtained by transactions. Second, restarted transactions release their locks, but their restart is delayed until the conflicting transactions are completed or themselves restarted. This results in reduced wasted CPU processing, since such restarted transactions may be conflicted and restarted again by the original transactions. Third, as compared to the RP methods, the WDL method is symmetrical in that an active transaction which encounters a lock conflict (with an active transaction) and is to be blocked, is itself considered for restart if it is blocking some other transactions. This assures that no transaction is ever blocked by another blocked transaction.

The foregoing and other objects, aspects and advantages of the invention will be better understood from the following detailed description of a preferred embodiment of the invention with reference to the drawings, in which:
- Fig. 1: is a graph of conflicted transactions;
- Figs. 2A to 2D: are diagrams illustrating respectively an initial state and three cases of conflicted transactions demonstrating how the concurrency control method according to a preferred embodiment of the invention operates; and
- Fig. 3: is a flow diagram illustrating the conflict resolution process for the cases shown in Figs. 2A to 2D.

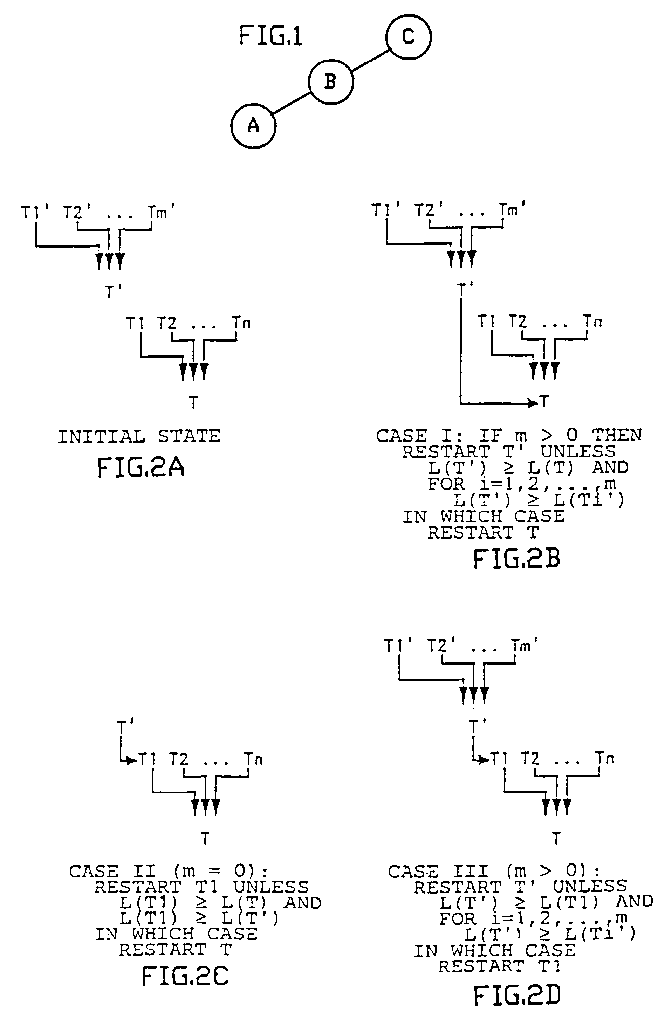

Referring now to the drawings, and more particularly to Fig. 1, we first illustrate an example of how the WDL method would operate. First, assume that transaction B is a transaction issuing a lock request, and that this request results in a conflict with transaction A. The WDL method reduces the wait tree to a depth of one by, in this case, restarting either transaction A or transaction B, based on properties of the transactions in this tree. This is merely an illustration, and a fully general description is given below.

Simulation results have shown that the WDL method generally outperforms the RP method, which in turn has superior performance to previously considered CC methods.

A class of methods will now be described that limits the depth of all wait trees to a given positive integer value d using transaction-specific information represented by a real-valued function L, where for each transaction T in the system at any instant of time L(T) provides some measure of the current "length" of the transaction. Ways of implementing this length function are described in more detail below. for the purpose of this description, let Vⱼ be a wait tree rooted at Tⱼ whose nodes are {Tᵢ}ⱼ. It could occur that two or more of the {Tᵢ}ⱼ are actually the same transaction. This situation can occur because conflicts are treated pair-wise. A consequence is the possibility of deadlock, so that if trees of depth greater than one are permitted, the case of deadlock needs to be considered. However, for WDL(d) with d=1, deadlocks are eliminated automatically, since a deadlock implies a wait chain of length at least two. The class of concurrency control methods referred to here as WDL(d) is as follows.

Given a lock conflict associated with a wait tree Vⱼ, then a concurrency control method is a member of WDL(d) if it restarts some subset of {Tᵢ}ⱼ as a function of [Vⱼ,{L(Tᵢ}ⱼ] so that the depth is reduced or kept to no more than d.

The foregoing description provides full generality. In the preferred embodiment of the invention, a method in WDL(1) is described; that is, a concurrency control method in which all wait trees are limited to a depth of one. Some ways of implementing the length function L are as follows: (1) L(T) is the number of locks currently held by transaction T. (2) L(T) is the maximum of the number of locks held by any incarnation of transaction T, including the current one. (3) L(T) is the sum of the number of locks held by each incarnation of T up to the current one. Other implementations of the length function may also be possible.

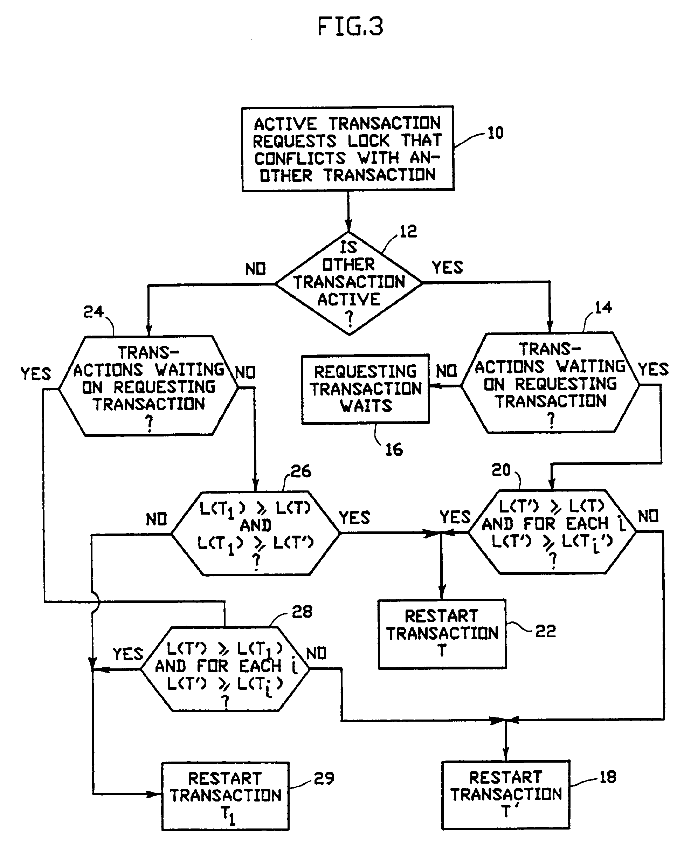

Referring now to Fig. 2A, suppose there are two active transactions T′ and T with m and n transactions waiting on each, respectively, shown in the figure as the initial state (where m or n could be zero). Since under WDL(1) no wait trees of depth greater than one will be allowed, there cannot be any transactions waiting on any of the Tᵢ′ or the Tⱼ, and thus this represents the general case for two active transactions. Suppose that T′ makes a lock request that conflicts with T or with one of the Tⱼ. Temporary states in which wait trees of depth two or three can occur are shown in Figs. 2B, 2C and 2D. Note that for the cases shown in Figs. 2C and 2D, n must be greater than zero in order for these cases to arise. For the preferred embodiment of the invention, the method is illustrated in the flow diagram of Fig. 3 follows. The process begins in function block 10 with an active transaction T′ requesting a lock that conflicts with another transaction.

In Fig. 2B, Case I is illustrated. A test is first made in decision block 12 to determine if the other transaction is active. Since transaction T is active in Case I, the result of this test is positive. A test is then made in decision block 14 to determine if there are transactions waiting on transaction T′. If m=0, the wait tree is of depth one and transaction T′ waits, as indicated by function block 16. Otherwise, m>0 and the wait tree is of depth two. In order to reduce the depth to one, transaction T′ is restarted in function block 18 unless L(T′)≧L(T) and, for each i, L(T′)≧L(Tᵢ′), as determined in decision block 20, in which case priority is given to transaction T′ and transaction T is restarted instead, as indicated in function block 22.

In Fig. 2C, Case II is illustrated. In this case, the test in decision block 12 is negative, and a test is made in decision block 24 to determine if any transactions are waiting are waiting on transaction T′. The result of this test in Case II is negative, i.e., m=0, and the wait tree is of depth two. In order to reduce the depth to one, transaction T₁ is restarted in function block 29 unless L(T₁)≧L(T) and L(T₁)≧L(T′), as determined by the test in decision block 26, in which case priority is given to transaction T₁, and transaction T is restarted instead, as indicated by function block 25.

In Fig. 2D, Case III is illustrated. In this case, the test in decision block 24 is positive; that is, there are other transactions waiting on the first or requesting transaction. The wait tree is therefore of depth three. In order to reduce the depth to one, transaction T′ is restarted in function block 18 unless L(T′)≧L(T₁) and, for each i, L(T′)≧L(Tᵢ′), as determined in function block 28, in which case priority is given to transaction T′, and transaction T₁ is restarted instead, as indicated in function block 25.

While the invention has been described in terms of a single preferred embodiment, those skilled in the art will recognize that the invention can be practiced with modification within the scope of the appended claims.

## Claims

1. A waiting depth limited concurrency control method which restricts the depth of a waiting tree to d in a multi-user data processing system wherein Vⱼ is a wait tree rooted at transaction Tⱼ whose nodes are a set of transactions {Tᵢ}ⱼ and L is a real-valued function where, for each transaction T in the system at any instant of time, L(T) provides a measure of the current length of a transaction, said method is characterized in that
for each request for a lock by the transaction Tⱼ a test (20, 26, 28) of the wait tree Vⱼ is performed to determine if its depth exceeds d, where d is equal to one; and that
the basic principle underlying the decision of which subset of transactions to restart is when an active transaction desires a lock already held by either another active transaction or another blocked transaction already waiting for a lock to be released, a subset of transactions to be restarted is chosen to preserve the maximum wait depth of the tree or trees of waiting transactions while promoting the rapid termination of the longest transactions implicated in the lock conflict according to the function L(T).

2. Method according to claim 1, wherein there are at least two active transactions T′ and T running on the data processing system with m and n transactions waiting on each, respectively, and m is greater than zero, and transaction T′ makes a lock request that conflicts with transaction T, characterized by the steps of:
testing to determine if L(T′)≧L(T) and if, for each i, L(T′)≧L(Ti′) (20); and
if so, giving priority to transaction T′ and restarting transaction T (22);
otherwise, restarting transaction T′ (18).

3. Method according to claim 1 or 2, wherein there are at least two active transactions T′ and T running on the data processing system with m and n transactions waiting on each, respectively, and m is equal to zero, and transaction T′ makes a lock request that conflicts with a transaction T₁ waiting on transaction T, characterized by the steps of:
testing to determine if L(T₁)≧L(T) and L(T₁)≧L(T′)(26); and
if so, restarting transaction T (22);
otherwise, restarting transaction T₁ (29).

4. Method according to one of the claims 1 to 3, wherein there are at least two active transactions T′ and T running on the data processing system with m and n transactions waiting on each, respectively, and m is greater than zero, and transaction T′ makes a lock request that conflicts with a transaction T₁ waiting on transaction T, characterized by the steps of:
testing to determine if L(T′)≧L(T₁) and, for each i, if L(T′)≧L(Tᵢ′) (28); and
if so, giving priority to transaction T′ and restarting transaction T₁ (29); otherwise, restarting transaction T′ (18).

5. Method according to one of the claims 1 to 4, wherein the function L(T) is the number of locks currently held by the transaction T.

6. Method according to one of the claims 1 to 4, wherein the function L(T) is the maximum number of locks held by any complete or partial execution (incarnation) of the transaction T.

7. Method according to one of the claims 1 to 4, wherein the function L(T) is the sum of the number of locks held by each complete or partial execution (incarnation) of the transaction T.

## Patentansprüche

1. Verfahren zur Steuerung des gemeinsamen Zugriffs mit Beschränkung der Warte-Tiefe, das die Tiefe eines Wartebaumes auf d in einem Datenverarbeitungssystem mit mehreren Benutzern beschränkt, wobei Vⱼ ein Wartebaum ist, der in Transaktion Tⱼ wurzelt, deren Knoten eine Gruppe von Transaktionen Tᵢⱼ sind und bei denen L eine Echtwertfunktion ist, wobei für jede Transaktion T im System zu einem beliebigen Zeitpunkt L(T) ein Maß der aktuellen Länge der Transaktion bildet, wobei das Verfahren dadurch gekennzeichnet ist, daß
für jede Verriegelungsanforderung durch die Transaktion Tⱼ eine Prüfung (20, 26, 28) des Wartebaumes Vⱼ durchgeführt wird, um zu bestimmen, ob seine Tiefe d überschreitet, wobei d gleich eins ist; und daß
das der Entscheidung zugrundeliegende Prinzip, welche Gruppe von Transaktionen erneut gestartet werden soll, darin besteht, wenn eine aktive Transaktion eine Verriegelung wünscht, die schon entweder von einer anderen aktiven Transaktion oder einer anderen blockierten Transaktion gehalten wird, die schon darauf wartet, daß eine Verriegelung gelöst wird, daß dann eine Gruppe von Transaktionen, die erneut gestartet werden soll, ausgewählt wird, um die maximale Wartetiefe des Baumes oder der Bäume der wartenden Transaktionen aufrechtzuerhalten, während der schnelle Abschluß der längsten gemäß der Funktion L(T) in den Verriegelungskonflikt einbezogenen Transaktionen vorangetrieben wird.

2. Verfahren gemäß Anspruch 1, wobei es mindestens zwei aktive Transaktionen T′ und T gibt, die auf dem Datenverarbeitungssystem mit m beziehungsweise n Transaktionen laufen, die aufeinander warten und wobei m größer als null ist und wobei Transaktion T′ eine Verriegelungsanforderung erteilt, die mit Transaktion T in Konflikt kommt, und durch die Schritte gekennzeichnet ist:
Prüfen, um zu bestimmen, ob L(T′) ≧ L(T) ist, und ob für jedes i L(T′) ≧ L(Tᵢ′) (20) ist; und
wenn dies der Fall ist, Erteilen der Priorität für Transaktion T′ und erneutes Starten der Transaktion T (22);
andernfalls erneutes Starten der Transaktion T′ (18).

3. Verfahren gemäß Anspruch 1 oder 2, wobei es mindestens zwei aktive Transaktionen T′ und T gibt, die auf dem Datenverarbeitungssystem mit m beziehungsweise n Transaktionen laufen und aufeinander warten und m gleich null ist und Transaktion T′ eine Verriegelungsanforderung abgibt, die mit einer Transaktion T₁ in Konflikt gerät, die auf Transaktion T wartet, und durch die Schritte gekennzeichnet ist:
Prüfen, um zu bestimmen, ob L(T₁) ≧ L(T) und L(T₁) ≧ L(T′) (26) ist; und
falls dies der Fall ist, erneutes Starten der Transaktion T (22);
andernfalls erneutes Starten der Transaktion T₁ (29).

4. Verfahren gemäß einem der Ansprüche 1 bis 3, wobei es mindestens zwei aktive Transaktionen T′ und T gibt, die auf dem Datenverarbeitungssystem mit m beziehungsweise n aufeinander wartenden Transaktionen laufen und wobei m größer als null ist und Transaktion T′ eine Verriegelungsanforderung aufgibt, die mit einer auf Transaktion T wartenden Transaktion T₁ in Konflikt gerät, und durch die Schritte gekennzeichnet ist:
Prüfen, um zu bestimmen, ob L(T′) ≧ L(T₁) ist und ob für jedes i L(T′) ≧ t(Tᵢ′) (28) ist; und
wenn dies der Fall ist, Erteilen der Priorität für die Transaktion T′ und erneutes Starten von Transaktion T₁ (29);
andernfalls erneutes Starten von Transaktion T′ (18).

5. Verfahren gemäß einem der Ansprüche 1 bis 4, wobei die Funktion L(T) die Anzahl der aktuell von der Transaktion T gehaltenen Verriegelungen ist.

6. Verfahren gemäß einem der Ansprüche 1 bis 4, wobei die Funktion L(T) die maximale Anzahl der von einer abgeschlossenen oder teilweise ausgeführten (Verkörperung) Transaktion T gehaltenen Verriegelungen ist.

7. Verfahren gemäß einem der Ansprüche 1 bis 4, wobei die Funktion L(T) die Summe der Anzahl der von jeder abgeschlossenen oder teilweise ausgeführten (Verkörperung) Transaktion T gehaltenen Verriegelungen ist.

## Revendications

1. Méthode de commande de simultanéité avec limitation de profondeur d'attente, assurant une limitation de la profondeur d'attente d'un arbre d'attente, à une valeur d, dans un système de traitement de données multi-utilisateur dans lequel Vⱼ est un arbre d'attente ayant sa racine à la transaction Tⱼ, dont les noeuds sont constitués par un jeu de transactions {Tⱼ}ⱼ et L est une fonction à valeur réelle, pour chaque transaction T dans le système, à chaque moment, L(T) donnant une mesure de la longueur instantanée de la transaction, ladite méthode étant caractérisée en ce que ;
pour chaque demande de maintien par la transaction Tⱼ, un test (20, 26, 28) de l'arbre d'attente Vⱼ est effectué, pour déterminer si sa profondeur dépasse d, d étant égal à un; et en ce que
le principe de base sous-jacent à la décision de redémarrer un sous-jeu de transactions est que, lorsqu'une transaction active souhaite qu'un blocage déjà maintenu par une autre transaction active ou une autre transaction bloquée déjà en attente d'un blocage soit libéré, un sous-jeu de transactions à redémarrer est choisi pour préserver la profondeur d'attente maximale de l'arbre ou des arbres des transactions en attente, tout en favorisant l'achèvement rapide des transactions de longueur maximale impliquées dans le conflit de blocage d'après la fonction L(T).

2. Méthode selon la revendication 1, dans laquelle il y a au moins deux transactions actives T′ et T en cours sur le système de traitement de données, avec m et n transactions en attente sur chacune, respectivement, et m supérieur à zéro et la transaction T′ produisant une demande de maintien entrant en conflit avec la transaction T, caractérisée par les étapes de :
conduite d'un test pour déterminer si L(T′)≧L(T) et si, pour chaque valeur de i, L(T′)≧L(Ti′) (20); et
dans l'affirmative donner la priorité à la transaction T′ et redémarrer la transaction T(22);
sinon redémarrer la transaction T′(18).

3. Méthode selon la revendication 1 ou 2, dans laquelle il y a au moins deux transactions actives T′ et T en cours sur le système de traitement de données, avec m et n transactions en attente sur chacune, respectivement, et m étant égal à zéro, et la transaction T′ donnant une demande de maintien entrant en conflit avec une transaction T₁ en attente sur la transaction T, caractérisée par les étapes de :
conduite d'un essai pour déterminer si L(T₁)≧L(T) et si L(T₁)≧L(T′) (26); et
dans l'affirmative, redémarrage de la transaction T(22);
sinon, redémarrer la transaction T₁(29).

4. Méthode selon l'une des revendications 1 à 3, dans laquelle il y a au moins deux transactions actives T′ et T, en cours sur le système de traitement de données avec m et n transactions en attente sur chacune, respectivement, et m supérieur à zéro, et la transaction T′ donnant une demande de maintien entrant en conflit avec une transaction T₁ en attente sur la transaction T, caractérisée par les étapes de :
conduite d'un test pour déterminer si L(T′)≧L(T₁) et, pour chaque valeur de i, si L(T′)≧L(Tᵢ′) (28); et
dans l'affirmative donner la priorité à la transaction T′ et redémarrer la transaction T₁(29);
sinon redémarrer la transaction T₁(18).

5. Méthode selon l'une des revendications 1 à 4, dans laquelle la fonction L(T) est le nombre de maintiens simultanément maintenus par la transaction T.

6. Méthode selon l'une des revendications 1 à 4, dans laquelle la fonction L(T) est le nombre maximal de maintiens, maintenus par toute exécution complète ou partielle (incarnation) de la transaction T.

7. Méthode selon l'une des revendications 1 à 4, dans laquelle la fonction L(T) est la somme du nombre de maintiens, maintenus par chaque exécution complète ou partielle (incarnation) de la transaction T.
